# EUROPEAN PATENT APPLICATION

(11) **EP 4 759 672 A1**
(43) Date of publication of application: **17.06.2026**
(21) Application number: 25196844.2
(22) Date of filing: 19.08.2025
(51) Int. Cl.: B61L 27/57, B61L 15/00, H04W 4/48

(54) **VEHICLE MONITORING AND CONTROL SYSTEM AND METHOD**

(30) Priority: 20.08.2024 US 202418810077
(71) Applicant: Transportation IP Holdings, LLC, Norwalk, CT 06851 (US)
(72) Inventor: Sevel, Evan P., Norwalk, 06851 (US)
(74) Representative: K&L Gates LLP

(57) **Abstract**

A control system is provided to receive a plurality of vehicle data from sensors in a vehicle communication network. The control system is disposed on a vehicle in a vehicle system and evaluates a plurality of components of the vehicle system with a predictive model associated with the sensor data. The control system may determine a vehicle status based on the predictive model and modify an operational plan or impose an operational restriction through a propulsion system of the vehicle.

## Description

### TECHNICAL FIELD

The subject matter described herein relates to a system and method that monitors and controls operation of a vehicle.

### SUMMARY

In one embodiment, a method comprising: obtaining sensor data of a vehicle system during operation of the vehicle system, and vehicle data associated with a current status of the vehicle system; determining a predictive vehicle status using a predictive model and the sensor data and the vehicle data; and changing an operational mode of the vehicle system based at least in part on the predictive vehicle status.

In another embodiment, a vehicle control system comprising: a control circuit configured to: determine a predictive vehicle status of a vehicle system based at least in part on a predictive model and sensor data, and one or both of vehicle data and a current location of the vehicle system; and change an operational mode of a propulsion system of the vehicle system based at least in part on the predictive vehicle status.

### BRIEF DESCRIPTION OF THE DRAWINGS

The subject matter may be understood from reading the following description of nonlimiting embodiments, with reference to the attached drawings, wherein below:
FIG. 1 shows a block diagram of a vehicle communication network vehicles with a control system, according to at least one aspect of the present disclosure.
FIG. 2 shows a control system, according to at least one aspect of the present disclosure.
FIG. 3 shows a block diagram for a vehicle communication network for evaluating a plurality of vehicle data parameters from one or more sensors or off-board devices, according to at least one aspect of the present disclosure.
FIG. 4 shows a logic flow diagram for a method for modifying an operational mode of a vehicle system based on an evaluation of sensor data, off-board data, and/or vehicle data with a predictive model, according to at least one aspect of the present disclosure.

### DETAILED DESCRIPTION

The disclosure describes a system and method for controlling operation of a vehicle. The system may use a vehicle communication network and may evaluate sensor data in real-time or near real-time to determine a vehicle status for one or more vehicles in a vehicle system. In various aspects, the control system of a vehicle in the vehicle system may receive a plurality of vehicle data and sensor data as inputs for a predictive model. The control system may determine the vehicle status based on an output of the predictive model and may modify an operational plan of the vehicle system or impose an operational restriction based at least in part on the determined vehicle status.

In one aspect, a vehicle system includes at least one control circuit that receives sensor data from a plurality of sensors over a vehicle communication network. The control circuit may determine an expected value with the predictive model for a vehicle component based on a plurality of parameters. In one example, the control circuit may determine an expected wheel bearing temperature based at least in part on one or more of trip duration, age of the component, load of the vehicle, elevation gain, current speed, or ambient temperature. Once the control circuit determines the expected value the control circuit may evaluate the sensor data to determine if the vehicle can safely reach its expected destination at projected operation conditions. The control circuit may determine that the vehicle cannot reach its expected destination and may need to modify an operational plan of the vehicle or impose operational restrictions on the vehicle.

While the vehicle system is illustrated as a rail vehicle system, in other embodiments the vehicle system may represent a grouping of other vehicles that travel together. Suitable vehicles may include automobiles, trucks, locomotives, marine vessels, mining vehicles, aerial vehicles (e.g., unmanned aerial vehicles, or UAVs), or other off-highway vehicles (e.g., vehicles that are not legally permitted or not designed for travel on public roadways). In one embodiment, the plurality of vehicles in the vehicle system may be mechanically coupled with each other (e.g., by couplers) while in other embodiments they may be logically coupled. In one example, the vehicles may communicate with each other to coordinate directional, propulsive and braking forces generated by the vehicles so that the vehicles travel together along the route as the vehicle system. Logical (aka virtual) coupling may be done in vehicle groups to create a convoy, consist, swarm, fleet, or platoon of vehicles. The vehicle system may include one or more propulsion-generating vehicles, that generate propulsive force to move the vehicles and the vehicle system along the route. Suitable non-propulsive vehicles may include trailers, rail cars, barges, or the like, and they do not generate propulsive force.

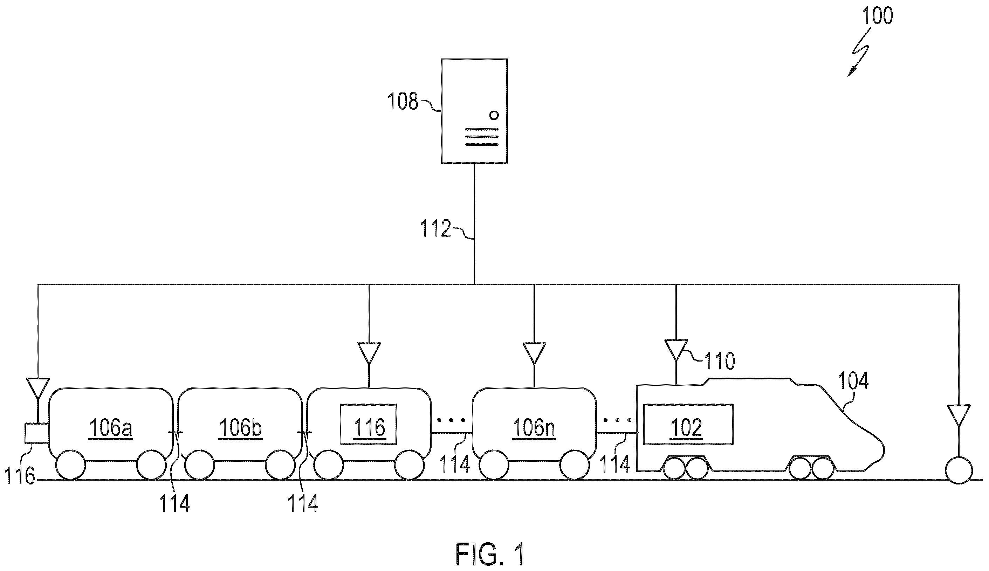

FIG. 1 shows a block diagram of a vehicle communication network 100 vehicles with a control system 102. The vehicles 104a-n, 106a-n in the vehicle system 120 have a communication device 110, and a plurality of communication paths, to include wired paths 114 and/or wireless paths 112, according to at least one aspect of the present disclosure.

Examples of the plurality of communication paths in the vehicle system may include a vibration based communication path, an audio communication path, an infrared communication path, a light based communication path, an ultraviolet communication path, a thermal communication path, a wireless radio frequency communication path, a Ethernet communication path, a RS232 communication path, a distributed power communication path (such as LocoTrol DP, which is commercially available from Wabtec Corporation), a wired electronically controlled pneumatics communication path, a wireless electronically controlled pneumatics communication path, a dynamic brake modem communication path, a Very High Frequency (VHF) communication path, an Ultra High Frequency (UHF) communication path, and an 802.11 communication path. Various operating modes may be used. Suitable modes may include point to point, synchronous and asynchronous, circuit switched and cellular configurations. The format of the message may be unique to the communication path. For example, message packets may be used when the communication path requires such a messaging format. The subsystems can use these alternate equipment and networks as a direct or a relayed path for intra-system communications. Examples of the specific subsystems include a brake control system, a head-of-train (or head-of-vehicle) device, an end-of-train (or end-of-vehicle) device, a distributed power device, and a vocal communication device.

In one embodiment, the vehicle communication network may support an electronically controlled pneumatics (ECP) network, or braking system, which is a wired network, that provides brake commands. A probable failure mode for wired ECP braking systems is a connector failure mid-train, disconnecting the rear half of the vehicle system. If this network were to fail in the middle of the vehicle system, a DP wireless RF network may be used to transfer information through an RF route/channel of the RF network. Using the RF route, the information can be forwarded to a remote vehicle, and then to the onboard ECP equipment on the remote vehicle, which could then command the rear portion of the ECP vehicle system. For example, the remote vehicle becomes a mirror to the master node on the ECP network, and the DP system on the remote vehicle replicates command and control from the lead vehicle to the braking system on the rear segment of the vehicle system. A supplemental ECP power supply on the remote vehicle is enabled, and the ECP braking system of the vehicle system functions as if there was no failure. This may reduce or eliminate operating the vehicle system in a degraded mode (such as at lower speed), or stopping and awaiting repair. This may enable a more reliable use of vehicles equipped with ECP-only braking systems, rather than a more expensive dual mode system that operates with ECP or conventional air pressure reduction braking control.

In various aspect, the vehicles in the vehicle system may send communication messages over the vehicle communication network and may transmit to and/or from locations that are off-board a vehicle. For example, a stationary facility 108, such as a dispatch facility, a maintenance facility, a repair facility, a vehicle yard, wayside sensor 122, or the like, may communicate wireless messages to one or more vehicles that are in different protocols that are used by the vehicles. Additionally, the vehicles may send messages to the off-board facilities that are in different protocols used by the off-board facility. The vehicles and/or off-board facility can convert the protocols of messages received in different protocols that are used by the vehicles and/or off-board facilities. In one example, a control system of a vehicle receives data including trip status information, vehicle status information, historical vehicle data, trained predictive models, etc., from the off-board facilities.

The vehicle system includes at least one of the vehicles with a control system that determines and optionally automatically implements operational settings of one or more of the vehicles. The control system may obtain an operational plan that dictates or designates different operational settings of the vehicle system and/or vehicles for different locations along the route, different times during a trip of the vehicle system, and/or different distances along the route. For example, the operational plan may designate different speeds, throttle settings, brake settings, etc., that the vehicle system and/or vehicles are to travel according to at different locations along the route. Various plans may be generated, for example, to reduce fuel consumption and/or emission generation by the vehicle system (while still traveling on-schedule) relative to the vehicle system traveling according to other settings (e.g., traveling at the speed limit of the route the entire time). The operational plan may outline a starting location, an ending location, total distance, and the route for a trip.

The control system may communicate with a plurality of off-board devices to receive a plurality of vehicle data parameters including but not limited to the operational plan (e.g., trip data, trip route, throttle data, brake data), historical vehicle data (e.g., service history, component history, damage events), vehicle location information, hand brake status (e.g., engaged, disengaged), vehicle load status (loaded, unloaded), or a predictive model (e.g., one or more models). For example, the control system may communicate with a sensor or sensor device 116 (e.g., on board device) that is disposed onboard another vehicle of the same vehicle system. The sensor device can measure or sense characteristics of the vehicle system and report the characteristics to the control system. In one embodiment, the sensor device is an end-of-train (EOT) or end-of-vehicle (EOV) device that is disposed at a trailing end of the vehicle system (e.g., along a direction of travel of the vehicle system). The sensor device may measure characteristics such as a status of a braking system of the vehicle system (e.g., air pressure in an air brake system) and communicate this information to the control system via the communication devices of the sensor device and the control system.

Suitable monitor parameters may generate thermal data, acoustic data, vibrational data, component position, vehicle position, tilt or angular data, imaging data and the like. The selection of sensors and the collection of associated sensor data may be performed with reference to specific end use parameters. These monitor parameters may relate to one or more vehicle component, such as wheel bearings, wheels, couplers, axles, and brake systems. The sensor data may be communicated to the control system over the vehicle communication network. Various parameters and sensor selection and location may be associable with particular components by the control circuit. In one example, the control system may associate sensor data with a specific component on a specific vehicle within the vehicle system. This allows the control system to indicate a specific location that maintenance may be required within the vehicle system. Further, vehicle identification systems may then associate the sensor readings/monitor parameters with particular vehicles. Accordingly, various sensor readings can then point to particular components on particular vehicles.

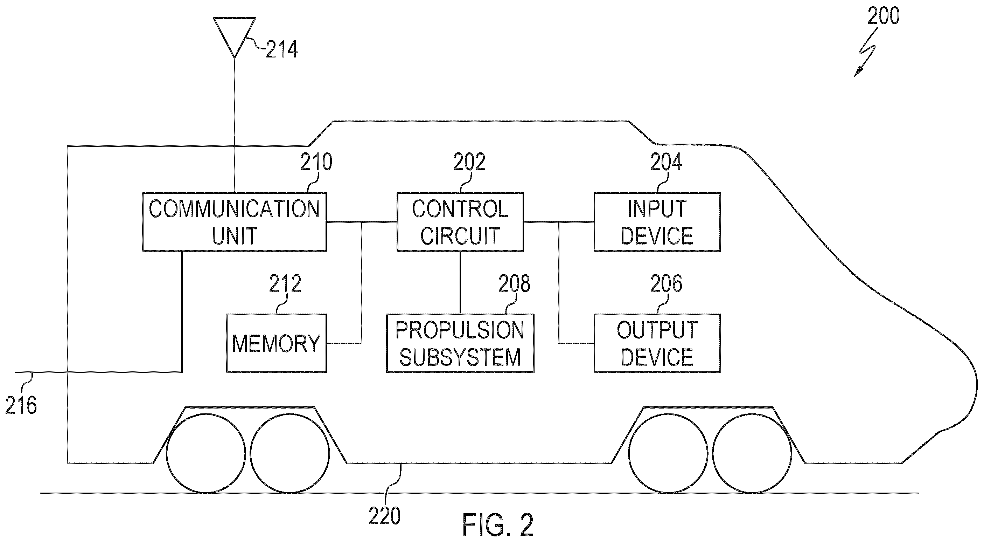

FIG. 2 shows a control system 200, according to at least one aspect of the present disclosure. The control system may include a control circuit 202 that controls operations. The control circuit may be communicably coupled to an input device 204 and an output device 206 (e.g., operational interface, graphical user interface). The control circuit can receive manual input from an operator of the propulsion-generating vehicle through the input device, such as a touchscreen, keyboard, electronic mouse, microphone, or the like. For example, the control circuit can receive manually input changes to the tractive effort, braking effort, speed, power output, and the like, from the input device. The control circuit can present information to the operator using the output device, which can be a display screen (e.g., touchscreen or other screen), speakers, printer, or the like. For example, the control circuit can present the contents, protocols, or the like, of messages received by the vehicle and/or communicated from the vehicle.

The control circuit is connected with a propulsion subsystem 208 of the propulsion-generating vehicle. The propulsion subsystem provides one or more of a tractive effort or a braking effort of the propulsion-generating vehicle. The propulsion subsystem may include or represent one or more engines, motors, alternators, generators, brakes, batteries, turbines, and the like, that operate to propel the propulsion-generating vehicle under the manual or autonomous control that is implemented by the control circuit. For example, the control circuit can generate control signals autonomously or based on manual input that is used to direct operations of the propulsion subsystem.

The control circuit may be connected with a communication unit 210 and a memory 212 of the communication network in the propulsion-generating vehicle. The communication unit may include a transceiver and associated circuitry (e.g., antennas) 214 for wirelessly communicating (e.g., communicating and/or receiving) messages. Optionally, the communication unit includes circuitry for communicating the messages over a wired connection 216, such as an electric multiple unit (eMU) line of the vehicle consist or another conductive pathway between or among the propulsion-generating vehicles. The control circuit may control the communication unit by activating the communication unit. The control system can control a vehicle 220.

The communication unit may examine the messages that are received by the vehicle and determine whether the protocol of the messages needs to be changed. The communication unit may determine the protocol of received messages, determine if the protocol is acceptable to the vehicle or the control circuit of the vehicle, and change the protocol of the message (which may include forming a new message with the new protocol or changing the protocol of the received message without forming a new message).

The control circuit may store messaging protocols and information used to determine protocols of received messages, information to determine acceptable protocols of the vehicle and/or control circuit, information on how to change protocols of a message, and the like. For example, the control circuit can store sets of data content of messages associated with different protocols, identifying information included in messages associated with different protocols, and other information described herein that can be used by the communication unit to determine the protocol of a received message.

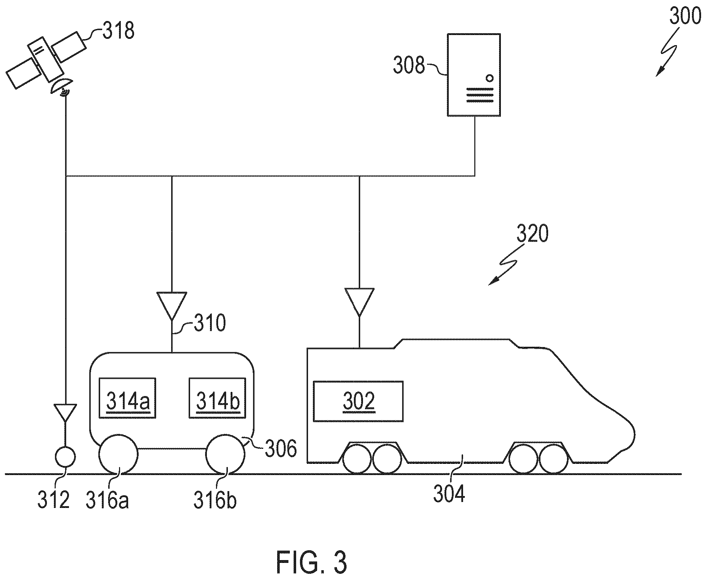

FIG. 3 shows a block diagram for a vehicle communication network 300 for evaluating a plurality of vehicle data parameters from one or more sensors or off-board devices, according to at least one aspect of the present disclosure. The vehicle communication network may include a control system 302 of first vehicle 304 in communication with a plurality of sensors or off-board devices including a stationary facility 308, a wayside sensor 312, and/or a communication satellite 316. The first vehicle may receive a plurality of data parameters associated with the vehicle system 320 from the off-board devices. The vehicle system includes at least the first vehicle and a second vehicle 306. The vehicle system is not limited to a set number of vehicles and may include a plurality of propulsion and non-propulsion vehicles.

In one example, at the outset of a trip, the first vehicle may receive a pre-trained predictive model and vehicle data associated with the vehicles in the vehicle system, from one of the sensors or off-board devices. In one example, the pre-trained predictive model may include a plurality of models for each vehicle component. The control system may query the sensors or off-board devices for vehicle data (e.g., service history, damage event, vehicle duty history, vehicle age, expected future duty for the vehicle, terrain that the vehicle is expected to traverse, other fleet performance data, etc. ) based on an identifier associated with each of the vehicles in the vehicle system. The control system may also determine a current vehicle status based on vehicle data including loaded/unloaded, location, hand brake engaged/disengaged, current elevation, ambient temperature, load type, current speed. The current vehicle status may determined for each of the plurality of vehicles in the vehicle system or cumulatively for the vehicle system. The vehicle data allows the control system to determine an expected value for each of the plurality of monitored components (e.g., wheel bearing: vibration amount, dB level, temperature, or any combination thereof) on the plurality of vehicles in the vehicle system. The expected values may represent a compliant temperature range or audio signature at the current operating conditions, for example.

The second vehicle includes a first sensor 314a associated with a first component 316a and a second sensor 314b associated with a second component 316b. The control system may calculate an expected sensor value for the first component based on the vehicle data associated with the second vehicle. The control system may receive sensor data associated with the second vehicle from the wayside sensor, the first sensor, the second sensor, or a combination thereof. The sensor data from the wayside sensor may be associated with a first data type (e.g. audio data) of the first component and/or the second component and may be used in combination with a second data type (e.g., thermal data) from the onboard sensors. In one example, the data from the first onboard sensors may indicate that the first component is within a compliant range for the vehicle component. However, the wayside sensor may indicate an irregular audio signature originating from the component. The control system may ultimately determine that the first component is outside of the expected value range based on a combination of audio data from the wayside sensor and temperature data from the first onboard sensor. In various embodiments, the wayside sensors may include acoustic bearing detectors (ABD) such as a trackside acoustic detection system (TADS^{®}) or railway bearing acoustic monitor (RailBAM^{®}), automatic cracked wheel detector (ACWD), dragging equipment detector (DED), hot box detector (HBD)/hot wheel detector (HWD), truck bogie optical geometry inspection (TBOGI), truck hunting detector (THD), truck performance detector (TPD), weighin-motion detector (WIM), wheel impact load detector (WILD), wheel profile measurement system (WPMS), and wheel temperature detector (WTD) systems.

The control system may evaluate the sensor data against the expected value, based on a standard deviation or other statistical probability (e.g., distribution or regression model). In one example, the control system may determine, with a predictive model, a probability of reaching the scheduled destination based on location data of the vehicle system (e.g., GPS, GNSS), the distance remaining to the scheduled destination, and the normal speed settings of the operational plan. If the probability is below a predetermined threshold, the control system may also calculate the probability of reaching the scheduled destination at a restricted speed. Additionally, the predictive model may use a plurality of vehicle parameters to calculate the probability of reaching the scheduled destination based on the predetermined threshold. If the probability is still below a threshold amount, the control system may determine the probability of reaching a waypoint or the distance to an unscheduled stopping location. As part of the evaluation, the control system may determine a trip status including any one of: whether the vehicle is on-schedule according to the operational plan, the estimated time remaining in the trip based on changes to an operational mode, and/or the estimated distance remaining based on the current vehicle location. Additionally, the control system may determine the suitability of the unscheduled stopping location based on an estimated number of mile that the vehicle system can safely travel, the schedule of other vehicles through the PTC system, and the ability to accommodate other vehicles. The control system may also avoid unsafe stopping locations such as bridges, tunnels, and road crossings.

The control system may store the sensor data from each of the plurality of sensors for monitoring components or retraining the predictive model. The sensor data may be monitored over a period of time to evaluate the change in values over the duration of the trip or multiple trips. The control system may determine, with the predictive model, that one of the vehicle components is experiencing an unexpected rate of change (e.g., 35-degree temperature increase in Celsius in 30 minutes) in a monitored component value. This monitoring may provide an early warning that a damage event occurred, or is about to occur, and the vehicle component is likely to fail. The stored sensor data may be used to retrain the predictive models by the control system or by the off-board facility. The control system may transmit the sensor data and time-dependent vehicle data to the off-board facility once the vehicle system concludes the trip or reaches the scheduled destination. The off-board facility may retrain the predictive model based on the sensor and transmit an updated model to the control system in the vehicle system. Alternatively, the control system may retain the model at the trip is concluded or in real-time during a trip.

The control system may evaluate the operational status of an individual vehicle component, vehicle, and/or vehicle system. The operational status of the vehicle system may be defined by a specific vehicle or specific vehicle component that is the farthest outside a compliant value range. For example, the overall operational status of the vehicle system is defined by the worst performing component or vehicle in the vehicle system.

The control system may generate a weighted metric to evaluate component compliance under various projected conditions including the current operating conditions (current speed, load, miles traveled), expected operation conditions for the entirety of the trip (projected conditions based on the route and operational plan). If the control circuit determines that the vehicle component is likely to experience failure before reaching the scheduled destination, the control system may evaluate the component under additional conditions including reduced speed conditions for the remaining portion of the trip, and reduced speed conditions to a new destination that is less than the distance to the scheduled destination (e.g., an unscheduled stop that is not the scheduled destination). The control system may generate a compliance range for any of the predicted conditions. In one example, the sensor data may be within a calculated compliance range, but close to an upper limit. The control system may flag or generate a notification to replace the vehicle component at the next scheduled service date.

If the predicted model indicates that the actual sensor data is outside the calculated compliance range (e.g., expect value), the control system may impose an operational restriction or modify an operational mode defined by the operational plan. The change to the operational mode may limit movement or other operations of the vehicle system. For example, an operational restriction can include a reduced speed limit (e.g., a speed limit that is slower than the speed limit of the route that is in place), a limitation on changes in the throttle settings of the vehicle system (e.g., a prohibition on increasing the throttle setting above a limit that is lower than a maximum throttle setting of the vehicle system, a frequency limit on how often the throttle setting can change, a reduced range of throttle settings, a prohibition on the rate of acceleration), or the like.

The control system may determine a transitional plan for changing movement of the vehicle system from a current operational mode to a reduced operational mode that complies with the operational restriction and may then automatically implement this transitional plan. Subsequently, the operational mode may change again and operate in the original manner, or in a third and different manner.

In one embodiment, the restriction may be a change that reduces operating speed in sequential steps based on additional inputs or as part of a gradual and controlled ramp down. For example, the control system may generate a plan or communicate with a propulsion system, an energy management system, and/or safety system (e.g., PTC system, PVC system, such as I-ETMS positive train control system that is available from Wabtec Corporation) to obtain an operational plan that dictates or designates different operational settings of the vehicle system at different locations, times, and/or distances along the route. Implementation of this operational plan can transition operation of the vehicle system from a current mode (e.g., the speed at which the vehicle system was traveling prior to or at the time when the communication loss occurred) to a reduced mode (e.g., the reduced speed limit). These plans may be determined and/or implemented automatically (e.g., without operator intervention) to eliminate or reduce distraction to an operator of the vehicle system (relative to the operator manually determining or implementing the plans).

In one aspect, the operational restriction may be communicated to the control system through a positive train control (PTC) system. For example, the PTC system may include wayside devices disposed alongside a route, which measure or sense vehicle speeds, presence, or component parameters. The wayside devices may communicate with nearby vehicles via wired connections (e.g., through conductive rails of a route) and/or wireless connections to inform the vehicles of vehicle data or speed restrictions. The control system may determine the operational restriction based on the wayside device or the PTC system. The PTC system may require that a vehicle system travels no faster than ten kilometers per hour (kph) based on an upcoming segment of the route that is occupied or damaged. The speed restriction may be communicated to the control system as the operational restriction. The speed restriction can be communicated even if the cause for implementing the speed restriction (e.g., the route occupancy or damage) is not actually occurring.

In another aspect, the control system may determine an operational change or restriction on operation of the vehicle system (e.g., propulsion-generating vehicle, off-highway vehicle, or a plurality of vehicles in consist) responsive to a predictive event. The operational change may limit movement or other operations of the vehicle system. For example, an operational restriction can include a reduced speed limit (e.g., a speed limit that is slower than the speed limit of the route), a limitation on changes in the throttle settings of the vehicle system (e.g., a prohibition on increasing the throttle setting above a limit that is lower than a maximum throttle setting of the vehicle system, a frequency limit on how often the throttle setting can change, a reduced range of throttle settings), or the like.

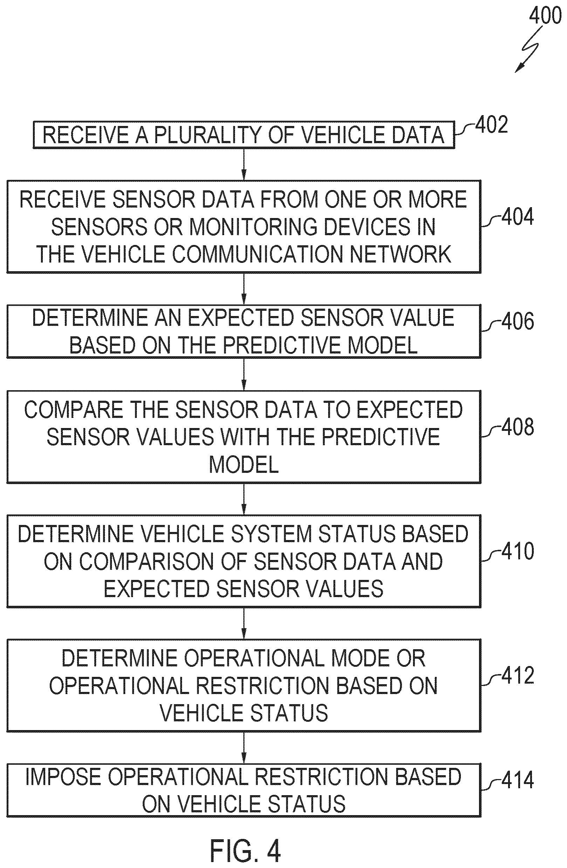

FIG. 4 shows a logic flow diagram for a method 400 for modifying an operational mode of a vehicle system based on an evaluation of sensor data, off-board data, and/or vehicle data with a predictive model, according to at least one aspect of the present disclosure. The method 400, or portions thereof, can be executed by the control system, for example. The method 400 includes receiving 402 a plurality of vehicle data from a sensor and/or off-board facility. The plurality of vehicle data parameters may include one or more of an operational plan (e.g., trip data, trip route, throttle data, brake data, scheduled destination, waypoint on the trip route), historical vehicle data (e.g., service history, component history, damage events), vehicle location information (e.g., current location), hand brake status (e.g., engaged, disengaged), vehicle load status (loaded, unloaded), or predictive model specific to the vehicle (e.g., one or more models).

The method further includes receiving 404 sensor data from one or more of a plurality of sensors or off-board devices in the vehicle system. Each of the plurality of sensors or off-board devices may be associated with one or a plurality of components of the vehicle system. The method determines 406 an expective sensor value for each of the plurality of vehicle components based on the vehicle data and the predictive model. The method compares the expected sensor value to the actual sensor value with the predictive model. The comparison may evaluate whether the actual sensor data is within a compliant range for the vehicle component. The method may use the actual sensor data to determine, based on the current location of the vehicle system, whether the vehicle system can safely travel to the scheduled destination. The method determines 410 a predictive vehicle status based on the comparison of the expected sensor value to the actual sensor value and the location of the vehicle system.

The predictive vehicle status may indicate that one or more of the vehicles is on-schedule according to the operational plan, a vehicle in the vehicle system has a component that is not compliant with a safety standard, or the vehicle system requires an operational restriction. The method determines 412, based on the predictive vehicle status, a change to the operational mode or operational restriction based on the actual sensor data and the predictive model and imposes 414 the change or operational restriction through the propulsion system. The change to the operational mode may include one or more of: a deviation to the operational plan including a decrease in speed at specific locations along the route, and/or braking at specific locations along the route, not exceeding a predetermined speed at specific locations along the route.

Examples of the method disclosed herein, according to various aspects of the present disclosure, are provided below in the following embodiments. An aspect of the method may include any one or more than one of, and any combination of, the embodiments described below.

In a first embodiment, the present disclosure provides a method, comprising: obtaining sensor data of a vehicle system during operation of the vehicle system, and vehicle data associated with a current status of the vehicle system; determining a predictive vehicle status using a predictive model and the sensor data and the vehicle data; and changing an operational mode of the vehicle system based at least in part on the predictive vehicle status.

Additionally, the first embodiment, further comprising: communicating a change in the operational mode to the vehicle system via a positive vehicle control system; and wherein the positive vehicle control system is a positive train control system, and communicating the change in the operational mode comprises issuing a bulletin to the vehicle system, or re-routing the vehicle system to a different destination relative to a scheduled destination set out in an operational plan, and the different destination is based at least in part on a current location of the vehicle system and the predictive vehicle status.

Alternatively, the first embodiment, further comprising: modeling data of components in a plurality of vehicles of the vehicle system based on at least one of: vehicle type, vehicle age, vehicle maintenance history, and vehicle use history, or route information for a route over which the vehicle system is planned to traverse in an operational plan or any combination thereof, wherein the modeling data is performed for each vehicle of the plurality of vehicles in the vehicle system; and predicting performance of the components via the modeling data and the route information, and determining the sensor data from a sensor in a vehicle communication network, wherein the sensor comprises at least one of a wheel impact load detector, railway bearing acoustic monitor, hot box detector, hot wheel detector, or any combination thereof; or wherein changing the operational mode comprises at least one of a changing a speed of the vehicle system changing a route of the vehicle system, or a combination thereof, wherein changing the speed comprises reducing the speed of the vehicle system to zero within a determined distance; or wherein the predictive vehicle status is further comprising: determining an expected value of a vehicle component; comparing the sensor data of the vehicle component to the expected value of the vehicle component; determining the sensor data is below a minimum threshold compared to the expected value; and calculating a time or distance to failure for the vehicle component based on the sensor data and the predictive model.

Alternatively, the first embodiment, further comprising: associating the sensor data with a component of a vehicle in the vehicle system; and determining the sensor data comprises at least one of: thermal data, acoustic data, vibrational data, tilt or angular data, visual data, or a combination thereof; or determining the component comprises any one of: an axel bearing, a vehicle wheel, a vehicle brake, or a vehicle coupler.

Alternatively, the first embodiment, further comprising: determining the predictive vehicle status based on the vehicle data, wherein the vehicle data comprises information associated with one or more of: vehicle type, vehicle age, vehicle maintenance history, vehicle use history, or a combination thereof; or determining the predictive vehicle status based on the vehicle data, wherein the vehicle data comprises service dates or damage events associated with one or more vehicles in the vehicle system; or determining a distance remaining for the vehicle system to reach either a waypoint or a scheduled destination based on a current location of the vehicle system, and determining a probability of success for the vehicle system to reach the scheduled destination at a normal speed and at a restricted speed based on a predetermined probability threshold, and determining the probability of success for the vehicle system to reach the scheduled destination is below the predetermined probability threshold, at the normal speed and at the restricted speed; and determining an unscheduled destination based on the probability of success for the vehicle system to reach the scheduled destination.

In a second embodiment, the present disclosure provides a vehicle control system comprising: a control circuit configured to: determine a predictive vehicle status of a vehicle system based at least in part on a predictive model and sensor data, and one or both of vehicle data and a current location of the vehicle system; and change an operational mode of a propulsion system of the vehicle system based at least in part on the predictive vehicle status; and the control circuit is further configured to: communicate a change in the operational mode to the vehicle system via a positive train control system, wherein the change in the operational mode comprises issuing a bulletin to the vehicle system; or the control circuit is further configured to: determine an expected value of a vehicle component; compare the sensor data of the vehicle component to the expected value of the vehicle component; determine the sensor data is below a minimum threshold compared to the expected value; and calculate a time or distance to failure for the vehicle component based on the sensor data and the predictive model.

In various aspects, one or more systems (e.g., control system) in the communication network may process data using artificial intelligence or machine learning. The communication network includes a local data collection system deployed that may use machine learning to enable derivation-based learning outcomes. The communication network may learn from and make decisions on a set of data (including data provided by the various sensors), by making data-driven predictions and adapting according to the set of data. In embodiments, machine learning may involve performing a plurality of machine learning tasks by machine learning systems, such as supervised learning, unsupervised learning, and reinforcement learning. Supervised learning may include presenting a set of example inputs and desired outputs to the machine learning systems. Unsupervised learning may include the learning algorithm structuring its input by methods such as pattern detection and/or feature learning. Reinforcement learning may include the machine learning systems performing in a dynamic environment and then providing feedback about correct and incorrect decisions. In examples, machine learning may include a plurality of other tasks based on an output of the machine learning system. In examples, the tasks may be machine learning problems such as classification, regression, clustering, density estimation, dimensionality reduction, anomaly detection, and the like. In examples, machine learning may include a plurality of mathematical and statistical techniques. In examples, the many types of machine learning algorithms may include decision tree based learning, association rule learning, deep learning, artificial neural networks, genetic learning algorithms, inductive logic programming, support vector machines (SVMs), Bayesian network, reinforcement learning, representation learning, rulebased machine learning, sparse dictionary learning, similarity and metric learning, learning classifier systems (LCS), logistic regression, random forest, K-Means, gradient boost, K-nearest neighbors (KNN), a priori algorithms, and the like. In embodiments, certain machine learning algorithms may be used (e.g., for solving both constrained and unconstrained optimization problems that may be based on natural selection). In an example, the algorithm may be used to address problems of mixed integer programming, where some components restricted to being integer-valued. Algorithms and machine learning techniques and systems may be used in computational intelligence systems, computer vision, Natural Language Processing (NLP), recommender systems, reinforcement learning, building graphical models, and the like. In an example, machine learning may be used for vehicle performance and behavior analytics, and the like.

In one embodiment, the communication network may include a policy engine that may apply one or more policies. These policies may be based at least in part on characteristics of a given item of equipment or environment. With respect to control policies, a neural network can receive input of a number of environmental and task-related parameters. These parameters may include an identification of a determined trip plan for a vehicle group, data from various sensors, and location and/or position data. The neural network can be trained to generate an output based on these inputs, with the output representing an action or sequence of actions that the vehicle group should take to accomplish the trip plan. During operation of one embodiment, a determination can occur by processing the inputs through the parameters of the neural network to generate a value at the output node designating that action as the desired action. This action may translate into a signal that causes the vehicle to operate. This may be accomplished via backpropagation, feed forward processes, closed loop feedback, or open loop feedback. Alternatively, rather than using backpropagation, the machine learning system of the controller may use evolution strategies techniques to tune various parameters of the artificial neural network. The maintenance system may use neural network architectures with functions that may not always be solvable using backpropagation, for example functions that are non-convex. In one embodiment, the neural network has a set of parameters representing weights of its node connections. A number of copies of this network are generated and then different adjustments to the parameters are made, and simulations are done. Once the output from the various models is obtained, they may be evaluated on their performance using a determined success metric. The best model is selected, and the vehicle controller executes that plan to achieve the desired input data to mirror the predicted best outcome scenario. Additionally, the success metric may be a combination of the optimized outcomes, which may be weighed relative to each other.

A "global positioning system" or "GPS" may include one or more global navigation satellite system (GNSS) signals to determine the location of the vehicle or vehicle system. The GNSS signal can be a signal that includes or represents a geographic position (latitude, longitude, and/or altitude) of the vehicle, and can be obtained by a GNSS receiver (e.g., a Global Positioning System, or GPS, receiver) onboard the vehicle that receives signals from off-board GNSS components (e.g., GNSS satellites). The global positioning system may be used to determine the location and/or velocity of the vehicle system by reporting GNSS signals to the control system by one or more different sensors or sources of information, such as a global positioning receiver on board the vehicle, from roadside or wayside sensors that report when the vehicle passes the sensors (e.g., roadside transponders), from wireless triangulation systems onboard the vehicle, cameras, or the like.

The "positive train control systems," "positive vehicle control systems," or "PTC systems" (e.g., Interoperable Electronic Train Management System (I-ETMS), European Train Control System (ETCS)) may refer to communication systems designed to prevent train-to-train collisions, derailments caused by excessive speeds, unauthorized movements in work zones, and the movement of rail vehicles through switches left in the wrong position. The PTC systems may enable real-time information sharing among trains, rail wayside devices, track transponders, and "back-office" applications. The PTC systems may utilize a dispatch center (e.g., off-board facility) that operates as a database and server for information related to the rail network and trains operating across the rail network. For example, the dispatch center may have one or more back-office servers that may receive and transmit speed limits, track composition, speed of individual locomotives, and train makeup. The dispatch center may authorize vehicles (e.g., trains, off-highway vehicles) for moving into new segments of track. The dispatch center may interface with other railroad back-office systems or applications. In one example, a navigation system is part of the PTC system. The PTC system may also be referred to as a "positive vehicle control" system or PVC system that may generally control any vehicle type.

The PTC system may include both off-board and on-board components may receive reports of vehicle parameters (e.g., position, speed, etc.) from the vehicle. The off-board component (e.g., dispatcher center) monitors the movements of many vehicles based on these reports, and sends instructions (e.g., movement authorities) that inform the on-board components of which segments of routes that the vehicles can safely enter into, how fast the vehicles can move in different segments of the routes, etc., to prevent collisions and/or ensure the vehicles are otherwise moving in safe ways. For example, the off-board component (e.g., dispatcher center) may issue a bulletin in response to reports of vehicle parameters.

Optionally, an operational restriction imposed on the vehicle may be based on a collision avoidance objective. This objective may be a goal to prevent the vehicle system from colliding with or otherwise contacting one or more other objects, such as other vehicles. For example, the operational restriction may be a reduced speed limit, a buffer distance (with the vehicle system being required to remain at least as far away as the buffer distance from other vehicles), an acceleration limitation, or other restriction that prevents the vehicle system from colliding with one or more other vehicles or objects.

The term "sensor" or "monitoring device" may refer to one or more devices in the vehicle communication network including at least one of a camera that generates video or image data, an x-ray detector, an acoustic pick-up device, a tachometer, a global positioning system receiver, a wireless device that transmits a wireless signal and detects reflections of the wireless signal to generate image data representative of bodies or objects behind walls, sides of cars, or other opaque bodies, or another device.

The term "vehicle" as used herein can be defined as a mobile machine that transports at least one of a person, people, or a cargo. For instance, a vehicle can be, but is not limited to being, a rail car, an intermodal container, a locomotive, a marine vessel, mining equipment, construction equipment, an automobile, a truck, a bus, or the like.

A "vehicle system" includes at least one vehicle. For example, a vehicle system may include one vehicle, or it may include two or more vehicles that are interconnected with each other to travel along a route. For example, a vehicle system can include two or more vehicles that are directly connected to each other (e.g., by a coupler) or that are indirectly connected with each other (e.g., by one or more other vehicles and couplers).

The term "vehicle consist" as used herein may be defined as a plurality of propulsion-generating vehicles in a vehicle system, wherein these vehicles operate together in a moving vehicle system. The plurality of propulsion-generating vehicles communicate with each other over a vehicle communication network, to move together along a predetermined route, without physical coupling. The numerous subsystems on the vehicles also may communicate with like subsystems on the other vehicles. As one example, vehicles may be provided in a distributed power (DP) arrangement with one vehicle designated as a lead vehicle and other vehicles designated as remote vehicles. The lead vehicle may direct the tractive and braking efforts provided by the remote vehicles during a trip of the vehicle system.

The term "wayside system" or "wayside device," as used herein, may refers to a system of off-board sensors including wayside devices (e.g., including radio frequency automatic equipment identification (RF AEI) tags), video or image acquisition devices, or the like. The wayside devices may be located proximate to a vehicle route and can communicate with nearby vehicles via wired connections (e.g., through conductive rails of a route) and/or wireless connections in order to inform the vehicles of vehicle information, measured parameters, and/or speed restrictions.

Wired or wireless communications may be used by the communication network. Components within the communication network may be communicatively coupled with each other by one or more wired and/or wireless connections. The communication network can be a time-sensitive network in that the communication network may operate according to one or more of the time-sensitive network standards of IEEE, such as the IEEE 802.1AS^{™}-2011 Standard, the IEEE 802.1Q^{™}-2014 Standard, the IEEE 802.1Qbu^{™}-2016 Standard, and/or the IEEE 802.3br^{™}-2016 Standard.

The foregoing detailed description has set forth various forms of the systems and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, and/or examples can be implemented, individually and/or collectively, by a wide range of hardware, software, firmware, or virtually any combination thereof. Those skilled in the art will recognize that some aspects of the forms disclosed herein, in whole or in part, can be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein are capable of being distributed as one or more program products in a variety of forms, and that an illustrative form of the subject matter described herein applies regardless of the particular type of signal bearing medium used to actually carry out the distribution.

As used in any aspect herein, the term "logic" may refer to an app, software, firmware and/or circuitry configured to perform any of the aforementioned operations. Software may be embodied as a software package, code, instructions, instruction sets and/or data recorded on nontransitory computer readable storage medium. Firmware may be embodied as code, instructions or instruction sets and/or data that are hard-coded (e.g., nonvolatile) in memory devices.

As used in any aspect herein, the terms "component," "system," "module" and the like can refer to a computer-related entity, either hardware, a combination of hardware and software, software, or software in execution.

As used in any aspect herein, an "algorithm" refers to a self-consistent sequence of steps leading to a desired result, where a "step" refers to a manipulation of physical quantities and/or logic states which may, though need not necessarily, take the form of electrical or magnetic signals capable of being stored, transferred, combined, compared, and otherwise manipulated. It is common usage to refer to these signals as bits, values, elements, symbols, characters, terms, numbers, or the like. These and similar terms may be associated with the appropriate physical quantities and are merely convenient labels applied to these quantities and/or states.

A network may include a packet switched network. The communication devices may be capable of communicating with each other using a selected packet switched network communications protocol. One example communications protocol may include an Ethernet communications protocol which may be capable of permitting communication using a Transmission Control Protocol/Internet Protocol (TCP/IP). The Ethernet protocol may comply or be compatible with the Ethernet standard published by the Institute of Electrical and Electronics Engineers (IEEE) titled "IEEE 802.3 Standard", published in December, 2008 and/or later versions of this standard. Alternatively or additionally, the communication devices may be capable of communicating with each other using an X.25 communications protocol. The X.25 communications protocol may comply or be compatible with a standard promulgated by the International Telecommunication Union-Telecommunication Standardization Sector (ITU-T). Alternatively or additionally, the communication devices may be capable of communicating with each other using a frame relay communications protocol. The frame relay communications protocol may comply or be compatible with a standard promulgated by Consultative Committee for International Telegraph and Telephone (CCITT) and/or the American National Standards Institute (ANSI). Alternatively or additionally, the transceivers may be capable of communicating with each other using an Asynchronous Transfer Mode (ATM) communications protocol. The ATM communications protocol may comply or be compatible with an ATM standard published by the ATM Forum titled "ATM-MPLS Network Interworking 2.0" published August 2001, and/or later versions of this standard. Of course, different and/or after-developed connectionoriented network communication protocols are equally contemplated herein.

This written description uses examples to disclose several embodiments of the inventive subject matter and also to enable a person of ordinary skill in the art to practice the embodiments of the inventive subject matter, including making and using any devices or systems and performing any incorporated methods. The patentable scope of the inventive subject matter is defined by the claims, and may include other examples that occur to those of ordinary skill in the art. Such other examples are intended to be within the scope of the claims if they have structural elements that do not differ from the literal language of the claims, or if they include equivalent structural elements with insubstantial differences from the literal languages of the claims.

## Claims

1. A method, comprising:
obtaining sensor data of a vehicle system during operation of the vehicle system, and vehicle data associated with a current status of the vehicle system;
determining a predictive vehicle status using a predictive model and the sensor data and the vehicle data; and
changing an operational mode of the vehicle system based at least in part on the predictive vehicle status.

2. The method of claim 1, further comprising:
communicating a change in the operational mode to the vehicle system via a positive vehicle control system.

3. The method of claim 2, wherein the positive vehicle control system is a positive train control system, and communicating the change in the operational mode comprises issuing a bulletin to the vehicle system.

4. The method of claim 2, further comprising re-routing the vehicle system to a different destination relative to a scheduled destination set out in an operational plan, and the different destination is based at least in part on a current location of the vehicle system and the predictive vehicle status.

5. The method of claim 1, further comprising:
modeling data of components in a plurality of vehicles of the vehicle system based on at least one of: vehicle type, vehicle age, vehicle maintenance history, and vehicle use history, or route information for a route over which the vehicle system is planned to traverse in an operational plan or any combination thereof, wherein the modeling data is performed for each vehicle of the plurality of vehicles in the vehicle system; and
predicting performance of the components via the modeling data and the route information.

6. The method of claim 5, further comprising:
determining the sensor data from a sensor in a vehicle communication network, wherein the sensor comprises at least one of a wheel impact load detector, railway bearing acoustic monitor, hot box detector, hot wheel detector, or any combination thereof.

7. The method of claim 1, wherein changing the operational mode comprises at least one of a changing a speed of the vehicle system changing a route of the vehicle system, or a combination thereof.

8. The method of claim 7, wherein changing the speed comprises reducing the speed of the vehicle system to zero within a determined distance.

9. The method of claim 1, wherein the predictive vehicle status is further comprising:
determining an expected value of a vehicle component;
comparing the sensor data of the vehicle component to the expected value of the vehicle component;
determining the sensor data is below a minimum threshold compared to the expected value; and
calculating a time or distance to failure for the vehicle component based on the sensor data and the predictive model.

10. The method of claim 1, further comprising:
associating the sensor data with a component of a vehicle in the vehicle system.

11. The method of claim 10, further comprising:
determining the sensor data comprises at least one of: thermal data, acoustic data, vibrational data, tilt or angular data, visual data, or a combination thereof.

12. The method of claim 10, further comprising:
determining the component comprises any one of: an axel bearing, a vehicle wheel, a vehicle brake, or a vehicle coupler.

13. The method of claim 1, further comprising:
determining the predictive vehicle status based on the vehicle data, wherein the vehicle data comprises information associated with one or more of: vehicle type, vehicle age, vehicle maintenance history, vehicle use history, or a combination thereof.

14. The method of claim 1, further comprising:
determining the predictive vehicle status based on the vehicle data, wherein the vehicle data comprises service dates or damage events associated with one or more vehicles in the vehicle system.

15. The method of claim 1, further comprising:
determining a distance remaining for the vehicle system to reach either a waypoint or a scheduled destination based on a current location of the vehicle system.

16. The method of claim 15, further comprising:
determining a probability of success for the vehicle system to reach the scheduled destination at a normal speed and at a restricted speed based on a predetermined probability threshold.

17. The method of claim 16, further comprising:
determining the probability of success for the vehicle system to reach the scheduled destination is below the predetermined probability threshold, at the normal speed and at the restricted speed; and
determining an unscheduled destination based on the probability of success for the vehicle system to reach the scheduled destination.

18. A vehicle control system comprising:
a control circuit configured to:
determine a predictive vehicle status of a vehicle system based at least in part on a predictive model and sensor data, and one or both of vehicle data and a current location of the vehicle system; and
change an operational mode of a propulsion system of the vehicle system based at least in part on the predictive vehicle status.

19. The vehicle control system of Claim 18, the control circuit is further configured to:
communicate a change in the operational mode to the vehicle system via a positive train control system, wherein the change in the operational mode comprises issuing a bulletin to the vehicle system.

20. The vehicle control system of Claim 18, the control circuit is further configured to:
determine an expected value of a vehicle component;
compare the sensor data of the vehicle component to the expected value of the vehicle component;
determine the sensor data is below a minimum threshold compared to the expected value; and
calculate a time or distance to failure for the vehicle component based on the sensor data and the predictive model.
